# EUROPÄISCHE PATENTSCHRIFT

(11) **EP 0 678 365 B1**
(45) Veröffentlichungstag und Bekanntmachung des Hinweises auf die Patenterteilung: **11.11.1998**
(21) Anmeldenummer: 95105113.5
(22) Anmeldetag: 05.04.1995
(51) Int. Cl.: B29B 9/06, B26D 7/22

(54) **Granuliervorrichtung für Strangmaterialien**
Pelletizing apparatus for filamentary material
Dispositif à granuler pour matières sous forme de ruban

(30) Priorität: 20.04.1994 DE 4413716
(43) Veröffentlichungstag der Anmeldung: 25.10.1995
(73) Patentinhaber: RIETER AUTOMATIK GmbH, D-63762 Grossostheim (DE)
(72) Erfinder: Pirrung, Walter, D-63762 Grossostheim (DE); Glaab, Berthold, D-63768 Hösbach (DE); Hohm, Laurenz, D-63762 Grossostheim (DE); Meidhof, Helmuth, D-63762 Grossostheim (DE); Wolf, Günther, D-63762 Grossostheim (DE)
(74) Vertreter: Bardehle, Heinz, Dipl.-Ing.

(56) Entgegenhaltungen:
- DE-A- 2 733 320
- FR-A- 2 618 369
- GB-A- 2 058 991
- PATENT ABSTRACTS OF JAPAN vol. 9, no. 60 (M-364) 16. März 1985 & JP-A-59 195 432 (KYOKUTO KAIHATSU KOGYO K.K.) 6. November 1984

## Beschreibung

Die Erfindung bezieht sich auf eine Granuliervorrichtung für Strangmaterialien mit einer Einzugsvorrichtung zur Erfassung des Strangmaterials und dessen Förderung zu einem Gegenmesser einer mit dem Gegenmesser zusammenarbeitenden Messerwalze zum Zerschneiden des Strangmaterials zu Granulat und einem Gehäuse, in dem die Einzugsvorrichtung, das Gegenmesser und die Messerwalze gelagert sind, wobei ein dem Antrieb der Messerwalze und der Einzugsvorrichtung dienender Motor neben dem Gehäuse angeordnet und über eine Antriebsachse mit den im Gehäuse enthaltenen, sich drehenden Bauteilen verbunden ist und Motor und Gehäuse auf einem gemeinsamen Träger befestigt sind.

Eine solche Granuliervorrichtung zusammen mit einer Zuleitvorrichtung für Kunststoffstränge ist in der DE-OS 39 00 250 offenbart. Die Granuliervorrichtung ist dabei auf einem Träger montiert, der aus einem Bock mit einer Grundplatte besteht, auf der die Granuliervorrichtung montiert ist.

Für die Wartung und Reparatur einer solchen Granuliervorrichtung ist es erforderlich, diese einerseits von der Einleiteinrichtung zu trennen, wozu in der Fig. 2 der DE-OS 39 00 250 ein Wagen gezeigt ist, der aufgrund angebrachter Rollen einen verfahrbaren Träger bildet. Es ist darüber hinaus auch erforderlich, die sich drehenden Bauteile der Granuliervorrichtung für Zwecke der Wartung oder Reparatur zugänglich zu machen, wozu normalerweise das Gehäuse mit den darin gelagerten Bauteilen vom Motor abgetrennt und vom Träger abgenommen wird. Für diese Trennung ist üblicherweise zwischen Motor und der in das Gehäuse hineinragenden Antriebsachse eine lösbare Kupplung vorgesehen. Für eine Inspektion der Granuliervorrichtung kann dann der Motor an dem Träger befestigt bleiben. Um dem Gehäuse einen sicheren Halt auf dem Träger zu geben, hat man bisher das Gehäuse mit Schrauben oder dergleichen am Träger befestigt, die also für eine Abnahme des Gehäuses vom Träger einzeln gelöst werden müssen. Für die Wiederanbringung des Gehäuses sind dann natürlich einzeln die betreffenden Verschraubungen wieder anzuziehen. Aus Gründen des Schallschutzes sind derartige Verschraubungen meist hinter Schallschutzwänden angebracht, was die Zugänglichkeit der Schrauben für die Abnahme und Wiederanbringung des Gehäuses erschwert.

Der Erfindung liegt die Aufgabe zugrunde, die Verbindung zwischen Gehäuse und dem Träger bei Aufrechterhaltung einer soliden Befestigung zu vereinfachen. Erfindungsgemäß geschieht dies dadurch, daß die Befestigung aus zwei Befestigungsmitteln besteht, die in der Projektion auf den Träger im Bereich der beiden neben der Antriebsachse liegenden Seiten des Gehäuses derart angeordnet sind, daß aufgrund des in das Gehäuse eingeleiteten Drehmoments das eine Befestigungsmittel als Zughalter eine Zugkraft vom Träger weg und das andere Befestigungsmittel als Druckhalter eine Druckkraft auf den Träger auffängt, wobei der Zughalter aufgrund hakenartiger Ausbildung das Gehäuse am Träger lösbar festhält und der Druckhalter als eine Bewegung des Gehäuses vom Zughalter weg verhindernde Arretierung ausgebildet ist.

Bei dieser Art der Befestigung des Gehäuses am Träger wird das von der Antriebsachse auf das Gehäuse übertragene Drehmoment ausgenutzt, das dem Gehäuse die Tendenz gibt, sich mit seiner einen Seite vom Träger abzuheben und mit seiner anderen Seite gegen den Träger anzudrücken. Unter Ausnutzung dieses Drehmomentes sorgt der Zughalter dafür, daß sich das Gehäuse auf der Seite des Zughalters nicht vom Träger abheben kann, wobei es aber gleichzeitig auf den Druckhalter drückt, der eine Bewegung des Gehäuses vom Zughalter weg verhindert. Das Gehäuse wird somit bei Betrieb der drehenden Bauteile fest am Träger gehalten und kann sich aufgrund der Arretierung durch den Druckhalter nicht diesem gegenüber verschieben. Im Fall einer notwendigen Abnahme des Gehäuses mit dem in ihm gelagerten Bauteilen ist bei abgeschaltetem Motor dieser von der Antriebsachse zu trennen, woraufhin das Gehäuse auf der Seite des Druckhalters angehoben werden kann, womit die durch den Druckhalter sonst gegebene Arretierung aufgehoben wird. Daraufhin läßt sich das Gehäuse wegen der hakenartigen Ausbildung des Zughalters aus diesem herausziehen, womit es vom Träger abgehoben werden kann, ohne daß es hierzu noch irgendwelcher weiterer Manipulationen bedarf.

Zweckmäßig ordnet man jeweils ein Paar Zughalter und Druckhalter auf den betreffenden beiden Seiten des Gehäuses parallel zur Antriebsachse an, so daß sich in Richtung der Antriebsachse längs des Gehäuses jeweils zwei Befestigungsstellen ergeben, insgesamt also vier Befestigungsstellen, mit denen das Gehäuse symmetrisch und besonders sicher am Träger befestigt werden kann. Selbstverständlich ist es auch möglich, insbesondere bei Kleineren Granuliervorrichtungen auf den betreffenden beiden Seiten des Gehäuses jeweils nur einen Zughalter und eine Druckhalter vorzusehen, sofern diese Befestigung den Anforderungen hinsichtlich Sicherheit und Stabilität genügt.

Vorteilhaft gestaltet man den Zughalter als einen am Träger befestigten Klotz mit schräg in ein Gehäuseteil passend übergreifendem Vorsprung und den Druckhalter als einen in einer Aufnahme im Gehäuse passenden und am Träger befestigten Stift. Der Klotz mit seinem schräg in ein Gehäuseteil passend übergreifenden Vorsprung zieht somit das Gehäuse, wenn dieses unter dem Einfluß des eingeleiteten Drehmomentes die Tendenz zum Abheben besitzt, gegen den Träger, wobei eine Verschiebung des Gehäuses gegenüber dem Träger durch den am Träger befestigten Stift verändert wird, der in eine Aufnahme im Gehäuse paßt. Bei dieser Aufnahme handelt es sich um eine runde Ausnehmung, die gegebenenfalls zur genauen Zentrierung mit einem Konus versehen sein kann, der zu einem entsprechenden Gegenkonus des Stiftes paßt. Zur Abnahme des Gehäuses wird dieses dann gegenüber dem Stift angehoben, wodurch sich die hakenartige Befestigung über dem Zughalter lösen läßt, womit dann die vollständige Abnahme des Gehäuses vom Träger ermöglicht ist.

Ein Ausführungsbeispiel der Erfindung ist in den Figuren darstellt. Es zeigen
- Fig. 1: eine Draufsicht auf einen Träger mit darauf montiertem Motor und Granuliervorrichtung,
- Fig. 2: eine Seitensicht der auf dem Träger sitzenden Granuliervorrichtung.

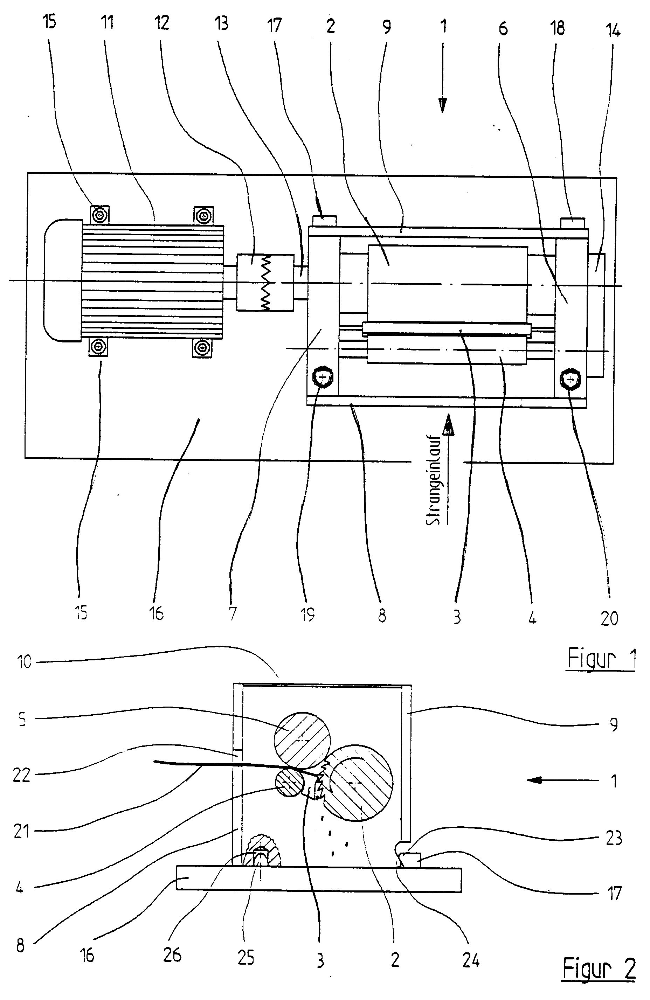

Die in der Fig. 1 dargestellte Granuliervorrichtung 1 besteht aus der Messerwalze 2, dem Gegenmesser 3 und der Einzugswalze 4. Aus Gründen der Übersichtlichkeit der Darstellung in der Fig. 1 ist die darüberliegende Einzugswalze 5, ersichtlich aus Fig. 2, nicht eingezeichnet. Diese Bauteile sind in bekannter Weise seitlich an den Wänden 6 und 7 eines Gehäuses gelagert, das weiterhin aus der Vorderwand 8 und der Rückwand 9 besteht. Der aus der Fig. 2 ersichtliche Deckel 10 ist in der Fig. 1 weggelassen, um Einblick in den Innenraum des durch die Bauteile 6, 7, 8, 9 und 10 gebildeten Gehäuses zu gewähren.

Neben der Granuliervorrichtung 1 ist der Motor 11 angeordnet, der über die lösbare Kupplung 12 mit der Antriebsachse 13 für die drehenden Bauteile in der Granuliervorrichtung 1 verbunden ist. Die Antriebsachse 13 wirkt direkt auf die Messerwalze 2. Der Antrieb der beiden Einzugswalzen 4 und 5 erfolgt dann, ausgehend von der Messerwalze 2, über ein an sich bekanntes Getriebe 14.

Der Motor 11 ist mittels der Bolzen 15 an dem Träger 16 angeschraubt. Die Befestigung der Granuliervorrichtung 1 am Träger 16 erfolgt mittels der beiden Zughalter 17, 18 und der Druckhalter 19 und 20, auf deren Gestaltung im Zusammenhang mit Fig. 2 näher eingegangen wird.

Zur Abnahme der Granuliervorrichtung 1 wird die Kupplung 12 gelöst und die Granuliervorrichtung mit ihrer Vorderwand 8 von dem Träger abgehoben, womit die der Arretierung dienenden Druckhalter 19 und 20 die Wände 6 und 7 freigeben, so daß die Zughalter 17 und 18 durch Verschieben der Granuliervorrichtung 1 in Richtung von den Zughaltern 17 und 18 weg von ihren Arretiermitteln freikommt und somit vom Träger 16 abgehoben werden kann.

Fig. 2 zeigt die Granuliervorrichtung gemäß Fig. 1 in Seitensicht, wobei die Wand 6 weggelassen ist so daß das Gegenmesser 4, über das die zu granulierenden Stränge 21 zugeführt werden, die Messerwalze 2 und die beiden Einzugswalzen 4 und 5 sichtbar sind. In der Vorderwand 8 ist der Schlitz 22 für die Zuführung der Kunststoffstränge 21 vorgesehen.

Auf dem hier als Grundplatte ausgebildeten Träger 16 ist der Zughalter 17 befestigt, der hier durch einen Klotz gebildet ist, dessen der Granuliervorrichtung zugewandte Seite durch den schrägen Vorsprung 23 gebildet ist. Der Vorsprung 23 übergreift das passend gestaltete Gehäuseteil 24, so daß der Vorsprung 23 die Rückwand 9 und damit die Granuliervorrichtung 1 gegen vom Träger 16 wegweisende Zugkräfte festhält. Diese Zugkräfte können durch die Einleitung des Drehmoments zu der Messerwalze 2 entstehen, die sich im Betrieb gemäß eingezeichnetem Pfeil dreht und aufgrund des auf sie wirkenden Drehmomentes einen Zug des Gehäuseteils 24 gegenüber dem Vorsprung 23 ausübt.

Auf dem Träger 16 ist weiterhin der Stift 25 befestigt, der bei auf den Träger aufgesetzter Granuliervorrichtung 1 in die seine Aufnahme bildende Bohrung 26 in der Granuliervorrichtung 1 hineinragt. Diese Bohrung verläuft in einem Gehäuseteil, das zu der Seitenwand 6 bzw. 7 gehört. Der Stift 25 ist konisch ausgebildet und paßt in einen entsprechenden Gegenkonus der Bohrung 26, wodurch die genaue Lage der Granuliervorrichtung 1 gegenüber dem Träger 16 definiert wird. Der Stift 25 besitzt weiterhin an seinem in die Bohrung 26 hineinragenden Ende hin eine Abrundung, die das Aufsetzen der Granuliervorrichtung 1 auf den Stift 25 erleichtert.

Es sei noch darauf hingewiesen, daß selbstverständlich bei der Anordnung gemäß Fig. 2 der Stift 25 und der Zughalter 17 je zweimal vorgesehen sind, wie dies aus Fig. 1 hervorgeht.

Zum Abnehmen der Granuliervorrichtung 1 vom Träger 16 wird die Granuliervorrichtung 1 zunächst mit ihrer Vorderwand 8 vom Träger 16 abgehoben, bis der Stift 25 nicht mehr in die Bohrung 26 hineinragt, womit die Granuliervorrichtung 1 in Richtung vom Zughalter 17 weggezogen werden kann. Dabei gibt der Vorsprung 23 das sonst übergriffene Gehäuseteil 24 frei, so daß nunmehr die Granuliervorrichtung 1 vom Träger abgehoben werden kann.

## Patentansprüche

1. Granuliervorrichtung (1) für Strangmaterialien (21) mit einer Einzugsvorrichtung (4,5) zur Erfassung des Strangmaterials (21) und dessen Förderung zu einem Gegenmesser (3), einer mit dem Gegenmesser (3) zusammenarbeitenden Messerwalze (2) zum Zerschneiden des Strangmaterials (21) zu Granulat und einem Gehäuse (6,7,8,9,10), in dem die Einzugsvorrichtung (4,5), das Gegenmesser (3) und die Messerwalze (2) gelagert sind, wobei ein dem Antrieb der Messerwalze (2) und der Einzugsvorrichtung (4,5) dienender Motor (11) neben dem Gehäuse (6,7,8,9,10) angeordnet und über eine Antriebsachse (13) mit den im Gehäuse (6,7,8,9,10) enthaltenen, sich drehenden Bauteilen (2,4,5) verbunden ist und Motor (11) und Gehäuse (6,7,8,9,10) auf einem gemeinsamen Träger (16) befestigt sind, **dadurch gekennzeichnet**, daß die Befestigung aus zwei Befestigungsmitteln besteht, die in der Projektion auf den Träger (16) im Bereich der beiden neben der Antriebsachse liegenden Seiten (8,9) des Gehäuses (6,7,8,9,10) derart angeordnet sind, daß aufgrund des in das Gehäuse (6,7,8,9,10) eingeleiteten Drehmoments das eine Befestigungsmittel als Zughalter (17,18) eine Zugkraft vom Träger (16) weg und das andere Befestigungsmittel als Druckhalter (19,20) eine Druckkraft auf den Träger (16) auffängt, wobei der Zughalter (17,18) aufgrund hakenartiger Ausbildung das Gehäuse (6,7,8,9,10) am Träger (16) lösbar festhält und der Druckhalter (19,20) als eine Bewegung des Gehäuses (6,7,8,9,10) vom Zughalter (17,18) weg verhindernde Arretierung ausgebildet ist.

2. Granuliervorrichtung nach Anspruch 1, dadurch gekennzeichnet, daß jeweils ein Paar Zughalter (17,18) und Druckhalter (19,20) auf den betreffenden beiden Seiten (8,9) des Gehäuses (6,7,8,9,10) parallel zur Antriebsachse (13) angeordnet ist.

3. Granuliervorrichtung nach Anspruch 1 oder 2, dadurch gekennzeichnet, daß der Zughalter aus einem am Träger (16) befestigten Klotz (17) mit schräg ein Gehäuseteil (24) passend übergreifendem Vorsprung (23) und der Druckhalter aus einem in eine Aufnahme im Gehäuse passenden und am Träger (16) befestigten Stift (25) besteht.

## Claims

1. Pelletiser (1) for strand materials (21), comprising a feed device (4, 5) for gripping the strand material (21) and conveying it to a bed knife (3), a rotor (2) cooperating with the bed knife (3) for cutting up the strand material (21) to form pellets and a housing (6, 7, 8, 9, 10) in which the feed device (4, 5), the bed knife (3) and the rotor (2) are mounted, a motor (11) serving to drive the rotor (2) and the feed device (4, 5) being arranged alongside the housing (6, 7, 8, 9, 10) and being connected via a drive shaft (13) to the rotating components (2, 4, 5) contained in the housing (6, 7, 8, 9, 10), and the motor (11) and the housing (6, 7, 8, 9, 10) being fixed on a common support (16), characterised in that the fixing device consists of two fixing means arranged in the projection on the support (16) in the region of the two sides (8, 9) of the housing (6, 7, 8, 9, 10) situated alongside the drive shaft in such a manner that, as a result of the torque introduced into the housing (6, 7, 8, 9, 10), one fixing means forming a tensioner (17, 18) supports a tensile force away from the support (16) and the other fixing means forming a pressuriser (19, 20) supports a compressive force on the support (16), the tensioner (17, 18) holding the housing (6, 7, 8, 9, 10) on the support (16) in a releasable manner as a result of its hook-shaped design and the pressuriser (19, 20) being in the form of a stop device preventing the housing (6, 7, 8, 9, 10) from moving away from the tensioner (17, 18).

2. Pelletiser according to claim 1, characterised in that respective pairs of tensioners (17, 18) and pressurisers (19, 20) are arranged on the two relevant sides (8, 9) of the housing (6, 7, 8, 9, 10) parallel to the drive shaft (13).

3. Pelletiser according to claim 1 or claim 2, characterised in that the tensioner consists of a block (17) fixed to the support (16) and having an inclined projection (23) engaging a matching housing part (24) and the pressuriser consists of a pin (25) fitting into a receiver in the housing and fixed to the support (16).

## Revendications

1. Dispositif de granulation (1) pour des matériaux filiformes (21), avec un dispositif introducteur (4, 5) pour saisir le matériau filiforme (21) et le transporter vers une contre-lame (3), avec un rouleau porte-lames (2) coopérant avec la contre-lame (3) pour découper le matériau filiforme (21) en granulats et avec un carter (6, 7, 8, 9, 10) dans lequel sont logés le dispositif introducteur (4, 5), la contre-lame (3) et le rouleau porte-lames (2), dans lequel un moteur (11) servant à entraîner le rouleau porte-lames (2) et le dispositif introducteur (4, 5) est agencé à côté du carter (6, 7, 8, 9, 10) et est relié par l'intermédiaire d'un arbre moteur (13) aux éléments rotatifs (2, 4, 5) contenus dans le carter (6, 7, 8, 9, 10) et selon lequel le moteur (11) et le carter (6, 7, 8, 9, 10) sont fixés sur un support (16) commun, caractérisé en ce que la fixation consiste en deux moyens de fixation qui, en projection sur le support (16), sont agencés dans la zone des deux côtés (8, 9) du carter (6, 7, 8, 9, 10) qui se trouvent près de l'arbre moteur de telle sorte que, en raison du couple engendré dans le carter (6, 7, 8, 9, 10), un des moyens de fixation intercepte en tant qu'élément résistant à la traction (17, 18) une force de traction éloignant du support (16) et l'autre moyen de fixation intercepte en tant qu'élément résistant à la poussée (19, 20) une force de poussée s'exerçant sur le support (16), l'élément résistant à la traction (17, 18) maintenant grâce à sa construction en forme de crochet le carter amovible (6, 7, 8, 9, 10) sur le support (16) et l'élément résistant à la poussée (19, 20) étant conçu comme un dispositif d'arrêt empêchant un déplacement du carter (6, 7, 8, 9, 10) hors de l'élément résistant à la traction (17, 18).

2. Dispositif de granulation selon la revendication 1, caractérisé en ce qu'une paire d'élément résistant à la traction (17, 18) et d'élément résistant à la poussée (19, 20) est agencée à chaque fois sur les deux côtés considérés (8, 9) du carter (6, 7, 8, 9, 10) parallèlement à l'arbre moteur (13).

3. Dispositif de granulation selon la revendication 1 ou 2, caractérisé en ce que l'élément résistant à la traction consiste en un bloc (17) fixé au support (16) et comportant une partie en saillie (23) passant obliquement juste au-dessus d'une partie de carter (24) et en ce que l'élément résistant à la poussée consiste en une broche (25) ajustée dans un logement dans le carter et fixée au support (16).
